(19) Europäisches Patentamt
European Patent Office
Office européen des brevets

(11) **EP 4 787 528 A1**

(12) **EUROPEAN PATENT APPLICATION**
published in accordance with Art. 153(4) EPC

(43) Date of publication:
**05.08.2026 Bulletin 2026/32**

(21) Application number: **23953441.5**

(22) Date of filing: **26.09.2023**

(51) International Patent Classification (IPC):
***H01M 10/0567*** *(2010.01)* ***H01M 10/0569*** *(2010.01)*

(52) Cooperative Patent Classification (CPC):
**H01M 10/0567; H01M 10/0569**

(86) International application number:
**PCT/CN2023/121743**

(87) International publication number:
**WO 2025/065283 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Dongguan Amperex Technology Limited**
**Dongguan City, Guangdong Province 523000 (CN)**

(72) Inventors:
- **PENG, Xiexue**
  **Dongguan, Guangdong 523000 (CN)**
- **ZHANG, Lilan**
  **Dongguan, Guangdong 523000 (CN)**
- **CUI, Hui**
  **Dongguan, Guangdong 523000 (CN)**
- **TANG, Chao**
  **Dongguan, Guangdong 523000 (CN)**

(74) Representative: **Kraus & Lederer PartGmbB**
**Thomas-Wimmer-Ring 15**
**80539 München (DE)**

(54) **ELECTROLYTE AND ELECTROCHEMICAL APPARATUS COMPRISING SAME**

(57) The present application discloses an electrolyte and an electrochemical device including the electrolyte. The electrolyte includes a compound of formula I and a compound represented by formula II. The compound of formula I includes at least two of a compound represented by formula I-A, a compound represented by formula I-B, and a compound represented by formula I-C, and at least includes the compound represented by formula I-A, where the compound represented by formula I-A contains at least one fluorine atom, and both the compound represented by formula I-B and the compound represented by formula I-C contain at least one halogen atom.

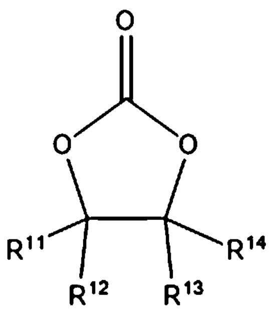
formula I-A
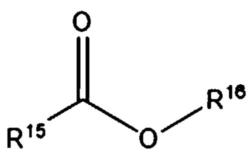
formula I-B

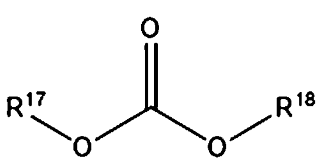
formula I-C
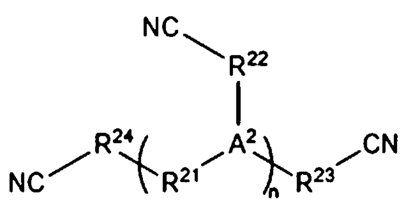
formula II

EP 4 787 528 A1

The electrolyte composition of the present application can improve the cycling performance and high-temperature storage performance of the electrochemical device.

## Description

### TECHNICAL FIELD

The present application relates to the technical field of batteries, and in particular to an electrolyte and an electrochemical device including the electrolyte.

### BACKGROUND

With the widespread application of electrochemical devices (for example, lithium-ion batteries) in various electronic products, users have put forward increasingly high requirements for the performance of electrochemical devices, especially lithium-ion batteries with high energy density. At present, the main method to increase the energy density of lithium-ion batteries is to increase the charging voltage of lithium-ion batteries. However, when the charging voltage of lithium-ion batteries is increased, a higher charging voltage will accelerate the oxidative decomposition of the electrolyte by high-valence transition metals in the positive electrode active material of lithium-ion batteries. The high-valence transition metals will obtain electrons from oxygen atoms for compensation, resulting in oxygen release, which in turn accelerates the decomposition of the electrolyte, leading to increased gas production in lithium-ion batteries and affecting the room-temperature cycling performance and high-temperature storage performance of lithium-ion batteries.

### SUMMARY

In view of this, the present application provides an electrolyte and an electrochemical device including the electrolyte. The electrolyte has good oxidation resistance, can inhibit its oxidative decomposition by high-valence transition metals in a positive electrode active material, and can stabilize the high-valence transition metals in the positive electrode active material, thereby improving the room-temperature cycling performance and high-temperature storage performance of the electrochemical device.

In a first aspect, the present application provides an electrolyte including a compound of formula I and a compound of formula II; where

the compound of formula I includes at least two of a compound represented by formula I-A, a compound represented by formula I-B, and a compound represented by formula I-C, and at least includes the compound represented by formula I-A;

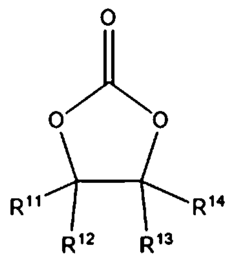
formula I-A

in formula I-A, $R^{11}$, $R^{12}$, $R^{13}$, and $R^{14}$ are each independently selected from hydrogen, fluorine, and substituted or unsubstituted $C_1$-$C_3$ alkyl, in a case of substitution, a substituent includes halogen, and the compound represented by formula I-A contains at least one fluorine atom;

in some embodiments, $R^{11}$, $R^{12}$, $R^{13}$, and $R^{14}$ are each independently selected from hydrogen, fluorine, and substituted or unsubstituted $C_1$-$C_3$ alkyl, in a case of substitution, a substituent includes a fluorine atom, and the compound represented by formula I-A contains at least one fluorine atom;

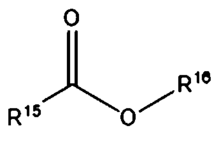
formula I-B

in formula I-B, $R^{15}$ and $R^{16}$ are each independently selected from substituted or unsubstituted $C_1$-$C_5$ alkyl, in a case of substitution, a substituent includes halogen, and the compound represented by formula I-B contains at least one halogen atom;

in some embodiments, $R^{15}$ and $R^{16}$ are each independently selected from substituted or unsubstituted $C_1$-$C_3$ alkyl, in a case of substitution, a substituent includes a fluorine atom, and the compound represented by formula I-B contains at least one fluorine atom;

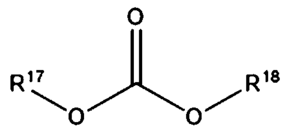 formula I-C

in formula I-C, $R^{17}$ and $R^{18}$ are each independently selected from substituted or unsubstituted $C_1$-$C_5$ alkyl, in a case of substitution, a substituent includes halogen, and the compound represented by formula I-C contains at least one halogen atom;

in formula I-C, $R^{17}$ and $R^{18}$ are each independently selected from substituted or unsubstituted $C_1$-$C_3$ alkyl, in a case of substitution, a substituent includes a fluorine atom, and the compound represented by formula I-C contains at least one fluorine atom;

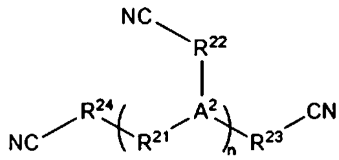 formula II;

and

in formula II, n is selected from integers of 0 to 4, $A^2$ is selected from any one of

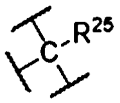 , 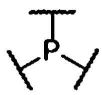 , or 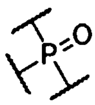 ,

and $R^{21}$, $R^{22}$, $R^{23}$, and $R^{24}$ are each independently selected from any one of a covalent single bond, $C_1$-$C_5$ alkylene, $C_2$-$C_4$ alkenylene, or

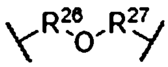 ;

where $R^{25}$ is selected from any one of hydrogen, cyano, $C_1$-$C_3$ alkyl, or $C_1$-$C_3$ alkyl substituted with cyano, and $R^{26}$ and $R^{27}$ are each independently selected from a covalent single bond or $C_1$-$C_3$ alkylene.

In the present application, by adding at least two of the compound represented by formula I-A, the compound represented by formula I-B, and the compound represented by formula I-C to the electrolyte, and at least including the compound represented by formula I-A, the synergistic cooperation between the above compounds can improve the oxidation resistance of the electrolyte, which is beneficial to inhibiting the oxidative decomposition of the electrolyte. Meanwhile, the present application further adds the compound represented by formula II to the electrolyte containing the compound of formula I. The compound having the structure represented by formula II is beneficial to stabilizing the high-valence transition metals in the positive electrode active material. Through the mutual cooperation between the compound of formula I and the compound represented by formula II, the interface between the positive electrode and the electrolyte and between the negative electrode and the electrolyte can be stabilized, thereby inhibiting gas production in the electrolyte and helping to improve the cycling performance and high-temperature storage performance of the electrochemical device.

In some embodiments, the compound represented by formula I-A is selected from at least one of the following compounds:

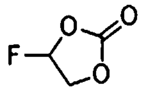 formula I-1, 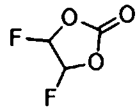 formula I-2, 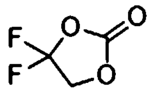 formula I-3,

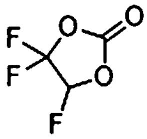 formula I-4, 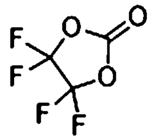 formula I-5, 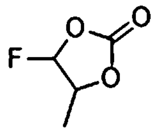 formula I-6,

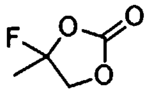 formula I-7, 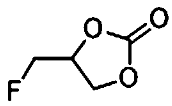 formula I-8, 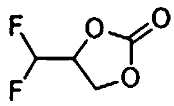 formula I-9,

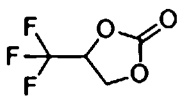 formula I-10, 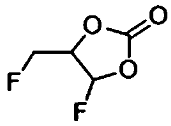 formula I-11, 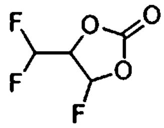 formula I-12,

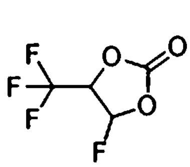 formula I-13, 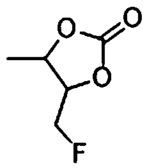 formula I-14, or 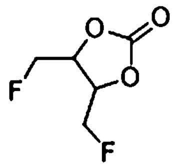 formula I-15.

In some embodiments, the compound represented by formula I-B is selected from at least one of the following compounds:

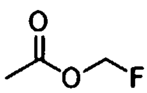 formula I-16, 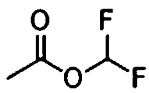 formula I-17,

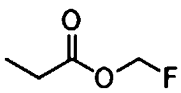 formula I-18, 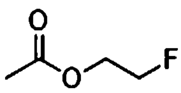 formula I-19,

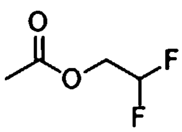 formula I-20, 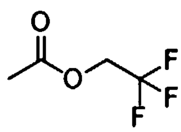 formula I-21,

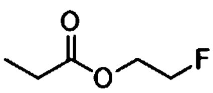 formula I-22, 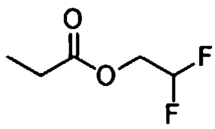 formula I-23,

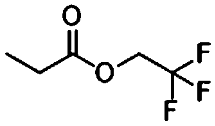 formula I-24, 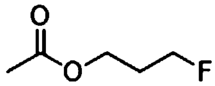 formula I-25,

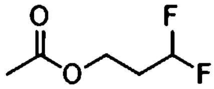 formula I-26, 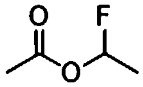 formula I-27,

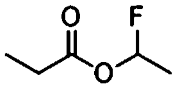 formula I-28, 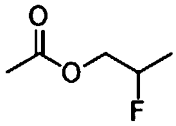 formula I-29,

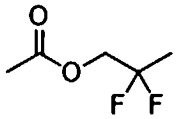 formula I-30, 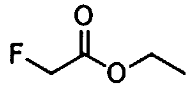 formula I-31,

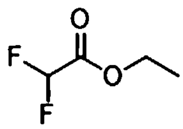 formula I-32, 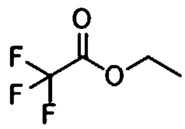 formula I-33,

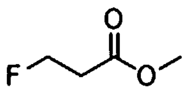 formula I-34, 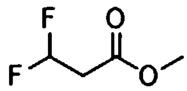 formula I-35,

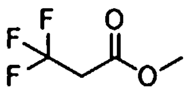 formula I-36, 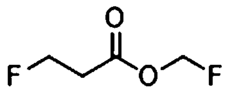 formula I-37,

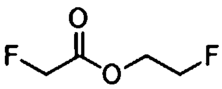 formula I-38, 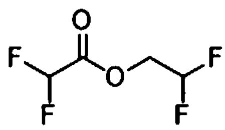 formula I-39, or

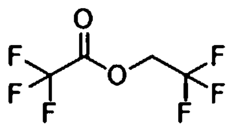 formula I-40.

In some embodiments, the compound represented by formula I-C is selected from at least one of the following compounds:

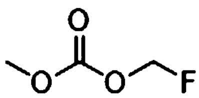 formula I-41, 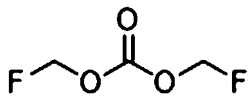 formula I-42,

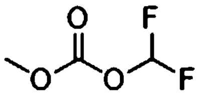 formula I-43, 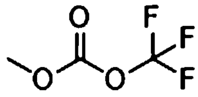 formula I-44,

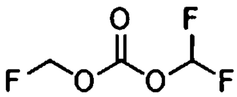 formula I-45, 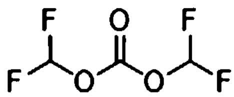 formula I-46,

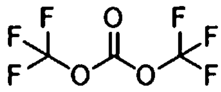 formula I-47, 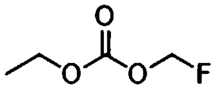 formula I-48,

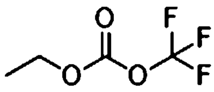 formula I-49, 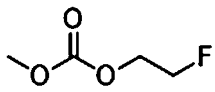 formula I-50,

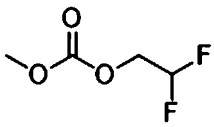 formula I-51, 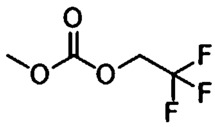 formula I-52,

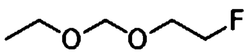 formula I-53, 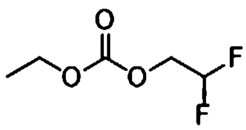 formula I-54,

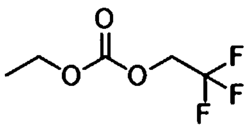 formula I-55, 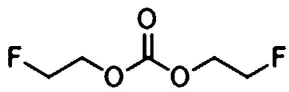 formula I-56,

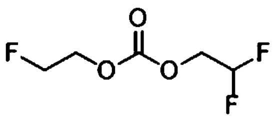 formula I-57, 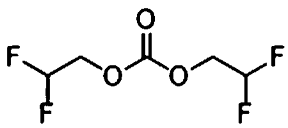 formula I-58,

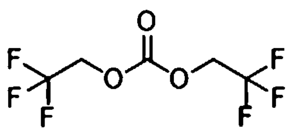 formula I-59, or 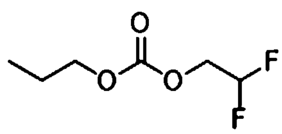 formula I-60.

In some embodiments, the compound represented by formula II is selected from at least one of the following compounds:

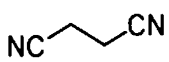 formula II-1, 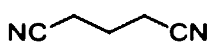 formula II-2,

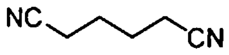 formula II-3, 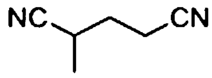 formula II-4,

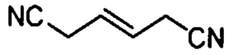 formula II-5, 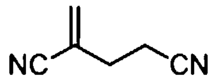 formula II-6,

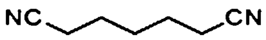 formula II-7, 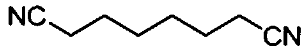 formula II-8,

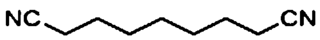 formula II-9, 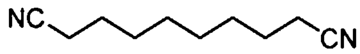 formula II-10,

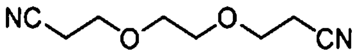 formula II-11, 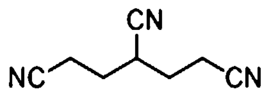 formula II-12,

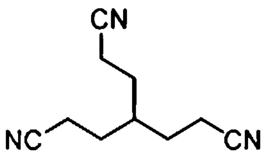 formula II-13, 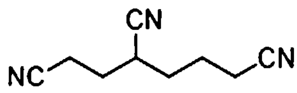 formula II-14,

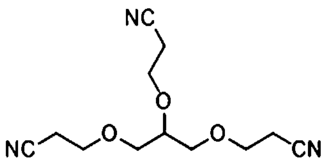 formula II-15, 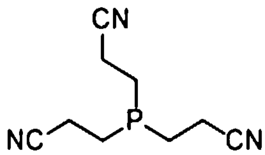 formula II-16,

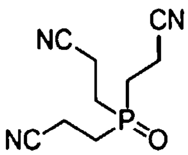 formula II-17, 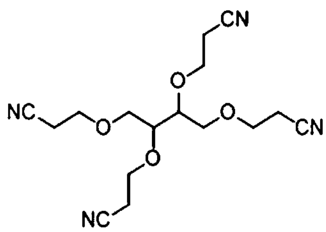 formula II-18,

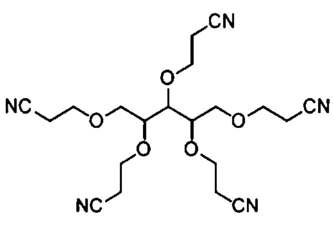 formula II-19, or 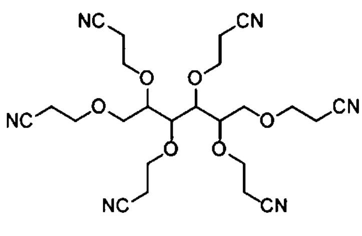 formula II-20.

In some embodiments, based on a mass of the electrolyte, a mass percentage of the compound represented by formula I-A is denoted as $x_1$%, a sum of the mass percentages of the compound represented by formula I-B and the compound represented by formula I-C is denoted as $x_2$%, a mass percentage of the compound represented by formula II is denoted as y%, a sum of $x_1$ and $x_2$ is denoted as x, and a ratio of x to y is denoted as z, satisfying: $20 \leq x \leq 90$. When the value of x is too small, the content of the compound of formula I in the electrolyte is too low, and the effect of improving the

oxidation resistance of the electrolyte is relatively limited. When the value of x is too large, the content of the compound of formula I in the electrolyte is too high, which is not beneficial to the dissociation of lithium salt in the electrolyte and affects the kinetic performance of the electrochemical device. Preferably, $80 \leq x \leq 90$.

In some embodiments, $5 \leq z \leq 90$ is satisfied. This is beneficial to improving the electrical performance of the electrochemical device, especially the room-temperature cycling performance and high-temperature storage performance of the electrochemical device. Preferably, $80 \leq z \leq 90$ is satisfied.

In some embodiments, $2 \leq x_2/x_1 \leq 20$ is satisfied. This is beneficial to forming an interface protective layer between the positive electrode and the electrolyte and between the negative electrode and the electrolyte, further improving the oxidation resistance of the electrolyte. Preferably, $4 \leq x_2/x_1 \leq 20$ is satisfied.

In some embodiments, $0.5 \leq y \leq 5$ is satisfied. The compound represented by formula II having a content within the above range is more beneficial to stabilizing the high-valence transition metals in the positive electrode active material, and when combined with the compound of formula I, is beneficial to further improving the high-temperature storage performance of the electrochemical device. Preferably, $1 \leq y \leq 3$ is satisfied.

In some embodiments, the electrolyte further includes a compound of formula III, and the compound of formula III includes a compound represented by formula III-A and/or a compound represented by formula III-B;

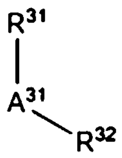 formula III-A 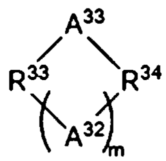 formula III-B,

where

in formula III-A and formula III-B, m is selected from 0 or 1, $A^{31}$, $A^{32}$, and $A^{33}$ are each independently selected from at least one of

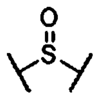, 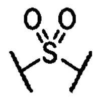,

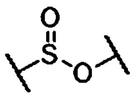, 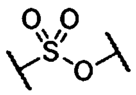, 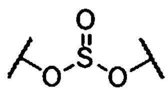, 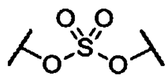, or 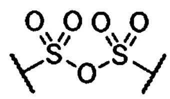, and 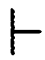

represents a binding site with an adjacent atom;

$R^{31}$ and $R^{32}$ are each independently selected from substituted or unsubstituted $C_1$-$C_5$ alkyl or substituted or unsubstituted $C_2$-$C_5$ alkenyl, and in a case of substitution, a substituent includes halogen; and

$R^{33}$ and $R^{34}$ are each independently selected from substituted or unsubstituted $C_1$-$C_5$ alkylene or substituted or unsubstituted $C_2$-$C_5$ alkenyl, and in a case of substitution, a substituent includes halogen.

In some embodiments, $R^{31}$ and $R^{32}$ are each independently selected from substituted or unsubstituted $C_1$-$C_3$ alkyl or substituted or unsubstituted $C_2$-$C_4$ alkenyl, and in a case of substitution, a substituent includes a fluorine atom.

In some embodiments, $R^{33}$ and $R^{34}$ are each independently selected from substituted or unsubstituted $C_1$-$C_3$ alkylene or substituted or unsubstituted $C_2$-$C_4$ alkenyl, and in a case of substitution, a substituent includes a fluorine atom.

In some embodiments, the compound of formula III is selected from at least one of the following compounds:

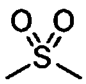 formula III-1, 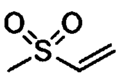 formula III-2, 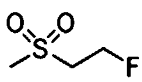 formula III-3,

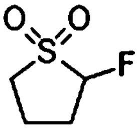 formula III-4, 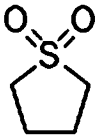 formula III-5, 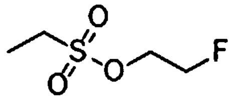 formula III-6,

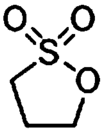 formula III-7, 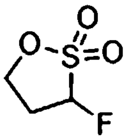 formula III-8, 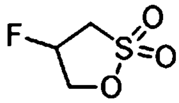 formula III-9,

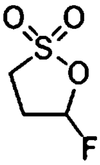 formula III-10, 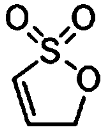 formula III-11, 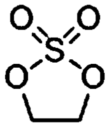 formula III-12,

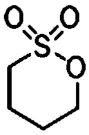 formula III-13, 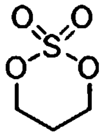 formula III-14,

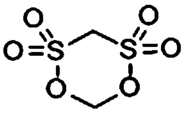 formula III-15, 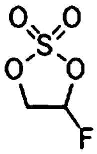 formula III-16,

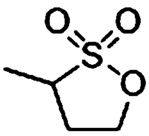 formula III-17, 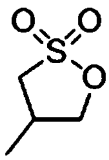 formula III-18,

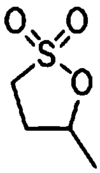 formula III-19, 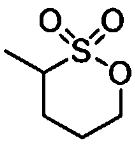 formula III-20,

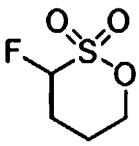 formula III-21, 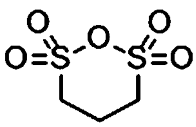 formula III-22,

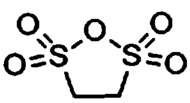 formula III-23, 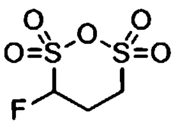 formula III-24,

or

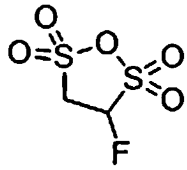

formula III-25.

In the electrolyte of the present application, the compound of formula III is further added. The compound of formula III is a compound containing a sulfur-oxygen double bond. The compound of formula III includes a compound represented by formula III-A and/or a compound represented by formula III-B. The compound having the structure represented by formula III-A and/or formula III-B has strong oxidation resistance; and when combined with other compounds in the electrolyte, on the one hand, can improve the stability of the positive electrode interface, and on the other hand, can be reduced on the surface of the negative electrode to form a protective film, inhibiting the decomposition of the electrolyte, further enhancing the stability of the interface, and helping to improve the high-temperature fully charged storage performance and room-temperature cycling performance of the electrochemical device.

In some embodiments, based on a mass of the electrolyte, a mass percentage of the compound of formula III is 0.1wt% to 6wt%. If the mass percentage of the compound of formula III is too low, the effect of reducing side reactions is relatively limited. If the mass percentage of the compound of formula III is too high, for example, greater than 6%, the enhancement effect of the electrolyte on the stability of the positive electrode interface and the negative electrode interface is no longer significantly improved, and may cause the viscosity of the electrolyte to be too large, affecting the kinetics and thus affecting the overall performance of the electrochemical device.

In some embodiments, the electrolyte further includes a compound represented by formula IV;

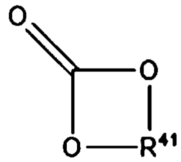

formula IV

in formula IV, $R^{41}$ is selected from substituted $C_1$-$C_6$ alkylene and substituted or unsubstituted $C_2$-$C_6$ alkenylene, and in a case of substitution, a substituent is selected from $C_2$-$C_6$ alkenyl.

In some embodiments, $R^{41}$ is selected from substituted $C_1$-$C_3$ alkylene and substituted or unsubstituted $C_2$-$C_4$ alkenylene, and in a case of substitution, a substituent is selected from $C_2$-$C_4$ alkenyl.

In some embodiments, the compound represented by formula IV is selected from at least one of the following compounds:

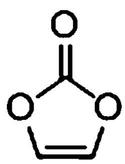

formula IV-1,

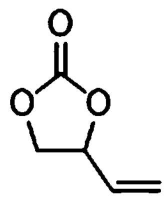

formula IV-2,

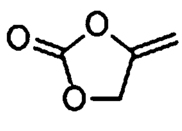

formula IV-3,

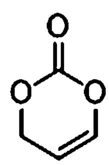

formula IV-4,

or

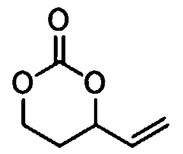 formula IV-5.

In the electrolyte of the present application, the compound of formula IV is further added. The compound of formula IV, when combined with other compounds in the electrolyte, is beneficial to enhancing the film-forming stability of the solid electrolyte interface SEI at the negative electrode. Using the compound of formula IV can also increase the flexibility of the SEI film, further enhancing the protective effect on the active material, reducing the probability of contact between the active material and the electrolyte interface, and reducing side reactions between the electrolyte and the active material, thereby reducing the impedance caused by the accumulation of side products during cycling.

In some embodiments, based on a mass of the electrolyte, a mass percentage of the compound represented by formula IV is 0.01wt% to 2wt%. If the mass percentage of the compound represented by formula IV is too low, the interface cannot be fully protected, and the improvement in the performance of the electrochemical device is limited. If the mass percentage of the compound represented by formula IV is too high, for example, greater than 2%, the interface impedance is too large, affecting the overall performance of the electrochemical device.

In some embodiments, the electrolyte further includes a compound represented by formula V;

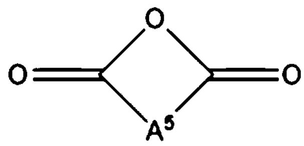 formula V,

where
in formula V, $A^5$ is selected from

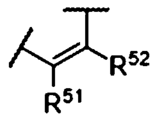 or 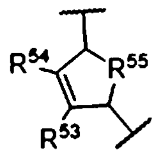,

$R^{51}$, $R^{52}$, $R^{53}$, and $R^{54}$ are each independently selected from hydrogen, substituted or unsubstituted $C_1$-$C_6$ alkyl, and substituted or unsubstituted $C_6$-$C_{10}$ aryl, $R^{55}$ is selected from substituted or unsubstituted $C_1$-$C_6$ alkylene, and in a case of substitution, a substituent includes halogen. In the electrolyte of the present application, the compound of formula V is further added. The compound of formula V, when combined with other compounds in the electrolyte, can further enhance the stability of the interface between the positive electrode and the electrolyte and between the negative electrode and the electrolyte.

In some embodiments, the compound represented by formula V is selected from at least one of the following compounds:

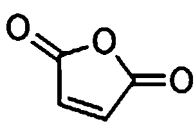 formula V-1, 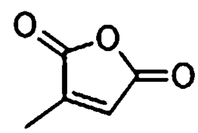 formula V-2,

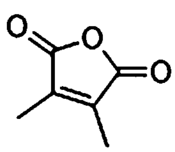 formula V-3, 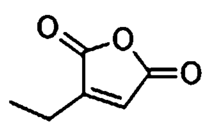 formula V-4,

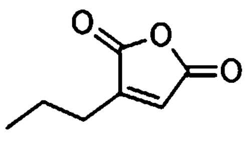 formula V-5, 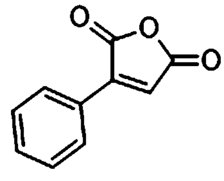 formula V-6,

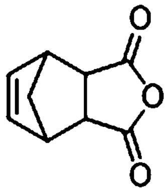 formula V-7, 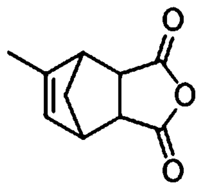 formula V-8,

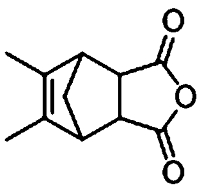 formula V-9, or 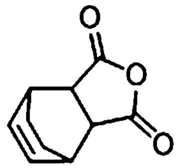 formula V-10.

In some embodiments, a mass percentage of the compound represented by formula V is 0.01wt% to 1wt%. If the mass percentage of the compound represented by formula V is too low, the interface cannot be fully protected, and the improvement in the performance of the electrochemical device is limited. If the mass percentage of the compound represented by formula V is too high, for example, greater than 1%, the interface impedance is too large, which is not beneficial to the improvement of the overall performance of the electrochemical device.

In some embodiments, a mass ratio of the compound of formula III, the compound represented by formula IV, and the compound represented by formula V is (2-5):(1-2):(1-2). This is more beneficial to improving the room-temperature cycling performance and high-temperature storage performance of the electrochemical device. Preferably, the mass ratio of the compound of formula III, the compound represented by formula IV, and the compound represented by formula V is (2-3):(1-2):(1-2).

In some embodiments, the electrolyte further includes a boron-containing lithium salt, the boron-containing lithium salt is selected from at least one of lithium tetrafluoroborate, lithium bis(oxalate)borate, or lithium difluoro(oxalate) borate, and based on the mass of the electrolyte, the mass percentage of the boron-containing lithium salt is 0.01wt% to 1wt%. The boron-containing lithium salt can form a film at the positive electrode interface together with other compounds in the electrolyte, protecting the positive electrode interface and further improving the cycling performance of the electrochemical device. The boron-containing lithium salt having a too low mass percentage is insufficient to protect the positive electrode interface, and has relatively limited effect on improving cycling. The boron-containing lithium salt having a high mass percentage, for example, greater than 1%, no longer has significantly increased improvement effect on cycling.

In a second aspect, the present application provides an electrochemical device, where the electrochemical device includes the above electrolyte.

The beneficial effects brought by the technical solutions provided by some embodiments of the present application at least include:

The present application provides the electrolyte and the electrochemical device including the electrolyte. The present application first introduces the compound represented by formula I-A into the electrolyte. The compound represented by formula I-A is beneficial to forming an interface protective layer between the positive electrode and the electrolyte and between the negative electrode and the electrolyte. Secondly, the present application further adds the compound represented by formula I-B and/or the compound represented by formula I-C to the electrolyte containing the compound represented by formula I-A. Through the synergistic cooperation between the compound represented by formula I-A and the compound represented by formula I-B and/or formula I-C, the oxidation resistance of the electrolyte is improved, thereby inhibiting the oxidative decomposition of the electrolyte. Finally, the present application further adds the compound represented by formula II to the electrolyte containing the compound of formula I. The compound having the structure represented by formula II is beneficial to stabilizing the high-valence transition metals in the positive electrode active material. Through the mutual cooperation between the compound of formula I and the compound represented by formula II, the interface between the positive electrode and the electrolyte and between the negative electrode and the electrolyte is stabilized, and gas production in the electrolyte is inhibited, thereby improving the cycling performance and

high-temperature storage performance of the electrochemical device.

## DETAILED DESCRIPTION OF EMBODIMENTS

In order to make the purpose, technical solutions, and advantages of the present application clearer, the present application will be further described in detail below in conjunction with the accompanying drawings and embodiments. It should be understood that the specific embodiments described herein are only used to explain the present application and are not used to limit the present application.

Electrolyte

A first aspect of the embodiments of the present application provides an electrolyte including a compound of formula I and a compound represented by formula II; where

the compound of formula I includes at least two of a compound represented by formula I-A, a compound represented by formula I-B, and a compound represented by formula I-C, and at least includes the compound represented by formula I-A;

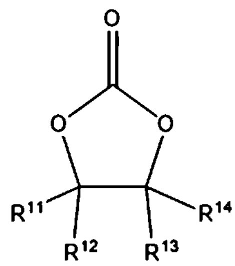
formula I-A

in formula I-A, $R^{11}$, $R^{12}$, $R^{13}$, and $R^{14}$ are each independently selected from hydrogen, fluorine, and substituted or unsubstituted $C_1$-$C_3$ alkyl, in a case of substitution, a substituent includes halogen, and the compound represented by formula I-A contains at least one fluorine atom;

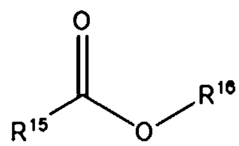
formula I-B

at least two of a compound represented by formula I-A, a compound represented by formula I-B, and a compound represented by formula I-C, and at least includes the compound represented by formula I-A;
in some embodiments, $R^{15}$ and $R^{16}$ are each independently selected from substituted or unsubstituted $C_1$-$C_3$ alkyl, in a case of substitution, a substituent includes a fluorine atom, and the compound represented by formula I-B contains at least one fluorine atom;

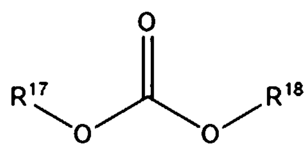
formula I-C

in formula I-C, $R^{17}$ and $R^{18}$ are each independently selected from substituted or unsubstituted $C_1$-$C_5$ alkyl, in a case of substitution, a substituent includes halogen, and the compound represented by formula I-C contains at least one halogen atom;
in formula I-C, $R^{17}$ and $R^{18}$ are each independently selected from substituted or unsubstituted $C_1$-$C_3$ alkyl, in a case of substitution, a substituent includes a fluorine atom, and the compound represented by formula I-C contains at least one fluorine atom;

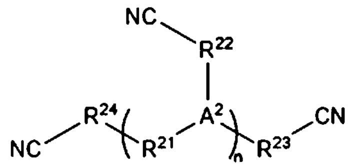 formula II;

and

in formula II, n is selected from integers of 0 to 4, $A^2$ is selected from any one of

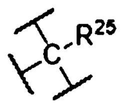 , 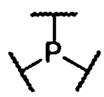 , or 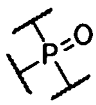 ,

and $R^{21}$, $R^{22}$, $R^{23}$, and $R^{24}$ are each independently selected from a covalent single bond, $C_1$-$C_5$ alkylene, $C_2$-$C_4$ alkenylene, or any one of

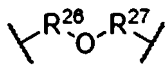 ;

where $R^{25}$ is selected from any one of hydrogen, cyano, $C_1$-$C_3$ alkyl, or $C_1$-$C_3$ alkyl substituted with cyano, and $R^{26}$ and $R^{27}$ are each independently selected from a covalent single bond or $C_1$-$C_3$ alkylene.

In some embodiments, the compound represented by formula I-A is selected from at least one of the following compounds:

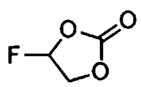 formula I-1, 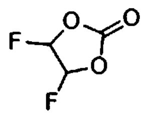 formula I-2, 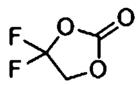 formula I-3,

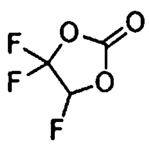 formula I-4, 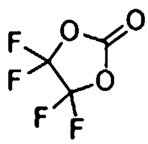 formula I-5, 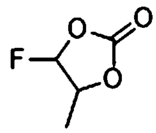 formula I-6,

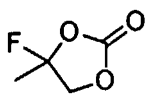 formula I-7, 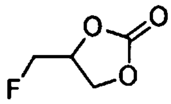 formula I-8, 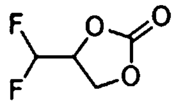 formula I-9,

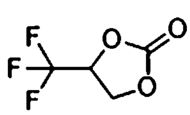 formula I-10, 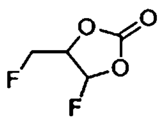 formula I-11, 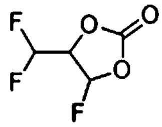 formula I-12,

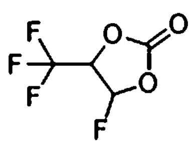 formula I-13, 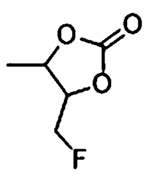 formula I-14, or 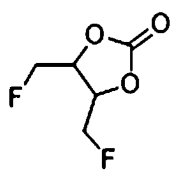 formula I-15.

In some embodiments, the compound represented by formula I-B is selected from at least one of the following compounds:

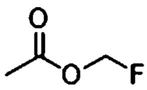 formula I-16, 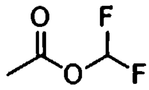 formula I-17,

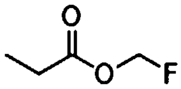 formula I-18, 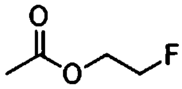 formula I-19,

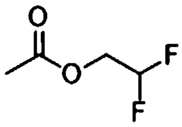 formula I-20, 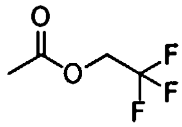 formula I-21,

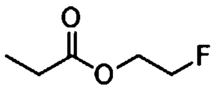 formula I-22, 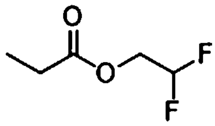 formula I-23,

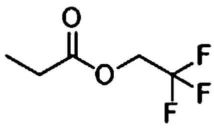 formula I-24, 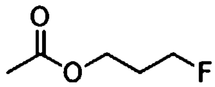 formula I-25,

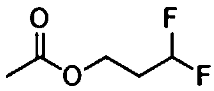 formula I-26, 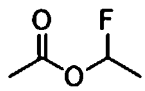 formula I-27,

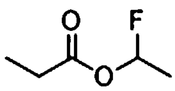 formula I-28, 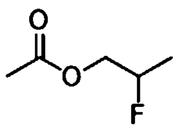 formula I-29,

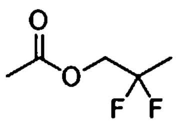 formula I-30, 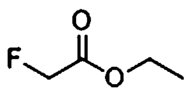 formula I-31,

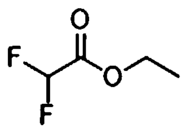 formula I-32, 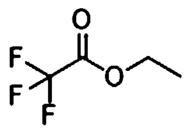 formula I-33,

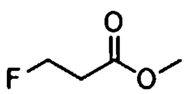 formula I-34, 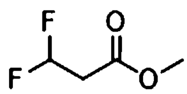 formula I-35,

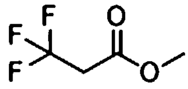 formula I-36, 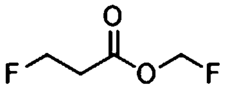 formula I-37,

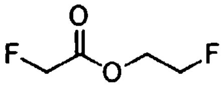 formula I-38, 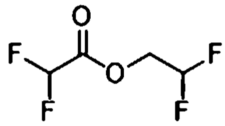 formula I-39,

or

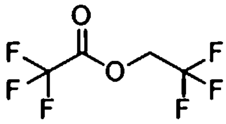 formula I-40.

In some embodiments, the compound represented by formula I-C is selected from at least one of the following compounds:

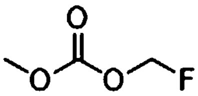 formula I-41, 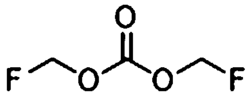 formula I-42,

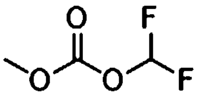 formula I-43, 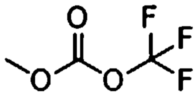 formula I-44,

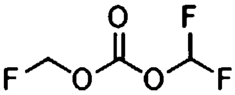 formula I-45, 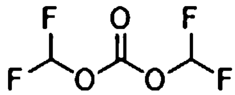 formula I-46,

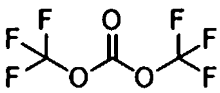 formula I-47, 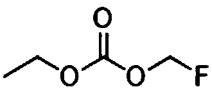 formula I-48,

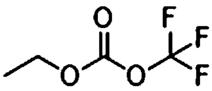 formula I-49, 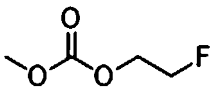 formula I-50,

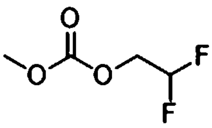 formula I-51, 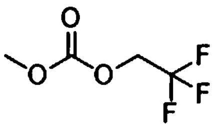 formula I-52,

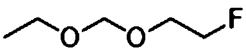 formula I-53, 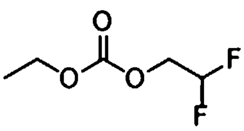 formula I-54,

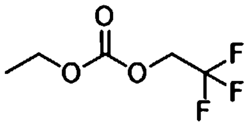 formula I-55, 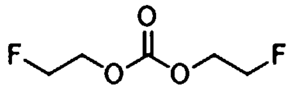 formula I-56,

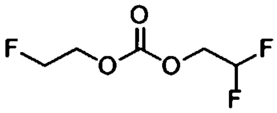 formula I-57, 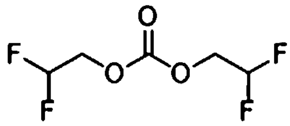 formula I-58,

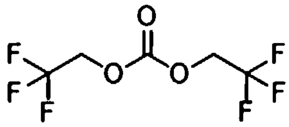 formula I-59, or 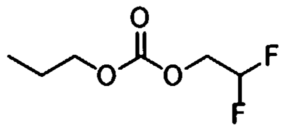 formula I-60.

In some embodiments, the compound represented by formula II is selected from at least one of the following compounds:

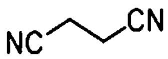 formula II-1, 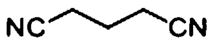 formula II-2,

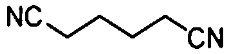 formula II-3, 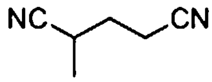 formula II-4,

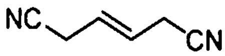 formula II-5, 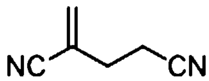 formula II-6,

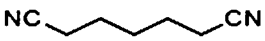 formula II-7, 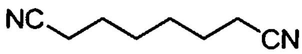 formula II-8,

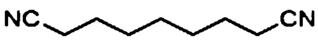 formula II-9, 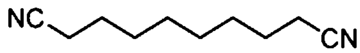 formula II-10,

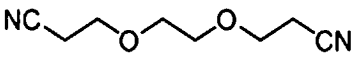 formula II-11, 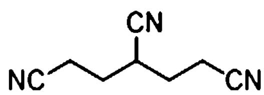 formula II-12,

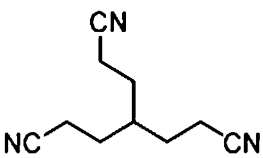 formula II-13, 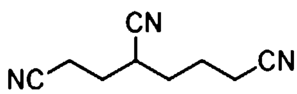 formula II-14,

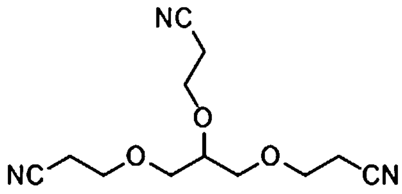 formula II-15, 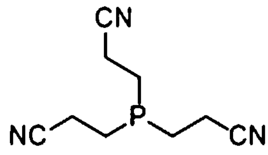 formula II-16,

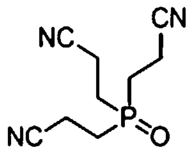 formula II-17, 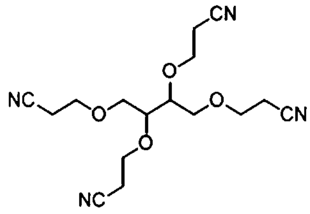 formula II-18,

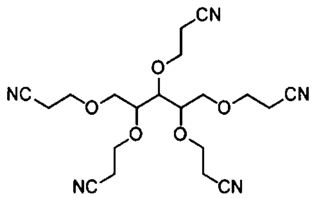 formula II-19, or 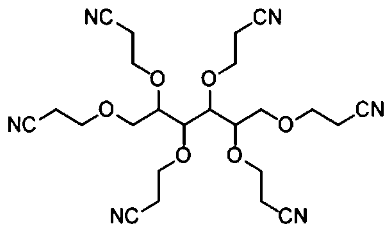 formula II-20.

In some embodiments, based on a mass of the electrolyte, a mass percentage of the compound represented by formula I-A is denoted as $x_1$%, a sum of mass percentages of the compound represented by formula I-B and the compound represented by formula I-C is denoted as $x_2$%, a mass percentage of the compound represented by formula II is denoted as y%, a sum of $x_1$ and $x_2$ is denoted as x, and a ratio of x to y is denoted as z, satisfying: $20 \leq x \leq 90$. Illustratively, the value of x may be in the range consisting of 20, 25, 30, 35, 40, 45, 50, 55, 60, 65, 70, 75, 80, 85, 90, or any two of the foregoing values.

In some embodiments, $2 \leq x_2/x_1 \leq 20$ is satisfied. Illustratively, $x_2/x_1$ may be 2, 3, 4, 6, 8, 10, 15, 20, or a range consisting of any two of the foregoing values.

In some embodiments, $0.5 \leq y \leq 5$ is satisfied. Illustratively, the value of y may be in the range consisting of 0.5, 1, 1.5, 2, 2.5, 3, 4, 5, or any two of the foregoing values.

In some embodiments, $5 \leq z \leq 90$ is satisfied. Illustratively, the value of z may be in the range consisting of 5, 10, 15, 20, 25, 30, 50, 60, 75, 80, 85, 90, or any two of the foregoing values.

In some embodiments, the electrolyte further includes a compound of formula III, and the compound of formula III includes a compound represented by formula III-A and/or a compound represented by formula III-B;

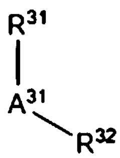 formula III-A 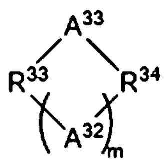 formula III-B, where

in formula III-A and formula III-B, m is selected from 0 or 1, $A^{31}$, $A^{32}$, and $A^{33}$ are each independently selected from at least one of

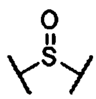, 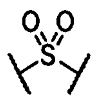,

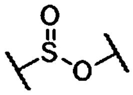, 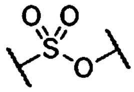, 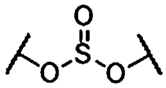, 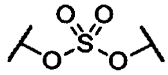, or 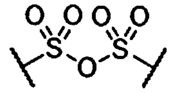, and 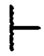

represents a binding site with an adjacent atom;

$R^{31}$ and $R^{32}$ are each independently selected from substituted or unsubstituted $C_1$-$C_5$ alkyl or substituted or unsubstituted $C_2$-$C_5$ alkenyl, and in a case of substitution, a substituent includes halogen; and

$R^{33}$ and $R^{34}$ are each independently selected from substituted or unsubstituted $C_1$-$C_5$ alkylene or substituted or unsubstituted $C_2$-$C_5$ alkenyl, and in a case of substitution, a substituent includes halogen.

In some embodiments, the compound of formula III is selected from at least one of the following compounds:

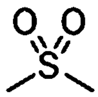 formula III-1, 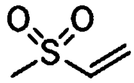 formula III-2,

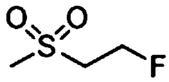 formula III-3, 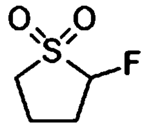 formula III-4,

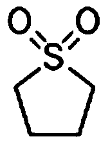 formula III-5, 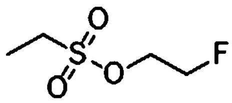 formula III-6,

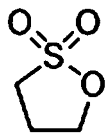 formula III-7, 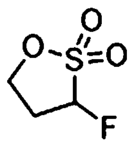 formula III-8,

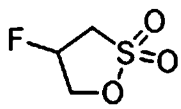 formula III-9, 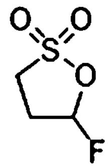 formula III-10,

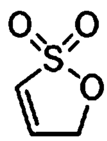 formula III-11, 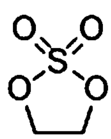 formula III-12,

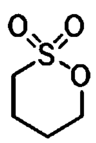 formula III-13, 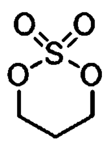 formula III-14,

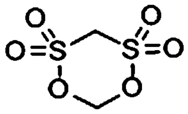 formula III-15, 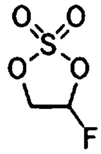 formula III-16,

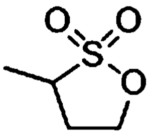 formula III-17, 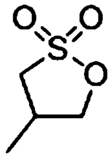 formula III-18,

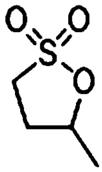 formula III-19, 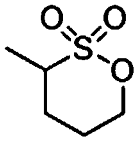 formula III-20,

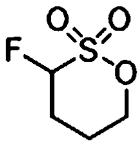 formula III-21, 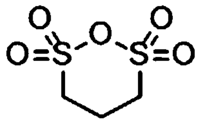 formula III-22,

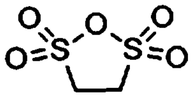 formula III-23, 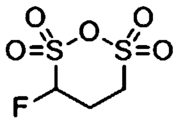 formula III-24,

or

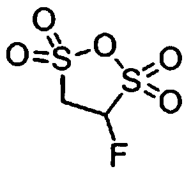 formula III-25.

In some embodiments, the electrolyte further includes a compound represented by formula IV;

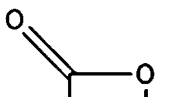 formula IV

in formula IV, $R^{41}$ is selected from substituted $C_1$-$C_6$ alkylene and substituted or unsubstituted $C_2$-$C_6$ alkenylene, and in a case of substitution, a substituent is selected from $C_2$-$C_6$ alkenyl.

In some embodiments, the compound represented by formula IV is selected from at least one of the following compounds:

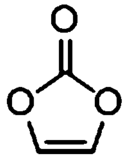 formula IV-1, 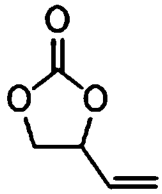 formula IV-2,

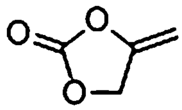 formula IV-3, 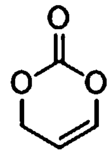 formula IV-4,

or

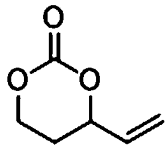 formula IV-5.

In some embodiments, the electrolyte further includes a compound represented by formula V;

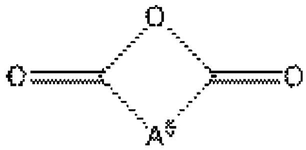 formula V,

where
in formula V, $A^5$ is selected from

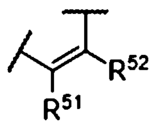 or 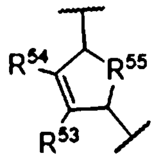 ,

$R^{51}$, $R^{52}$, $R^{53}$, and $R^{54}$ are each independently selected from hydrogen, substituted or unsubstituted $C_1$-$C_6$ alkyl, and substituted or unsubstituted $C_6$-$C_{10}$ aryl, $R^{55}$ is selected from substituted or unsubstituted $C_1$-$C_6$ alkylene, and in a case of substitution, a substituent includes halogen.

In some embodiments, the compound represented by formula V is selected from at least one of the following compounds:

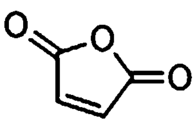 formula V-1, 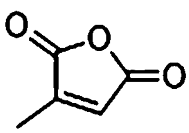 formula V-2,

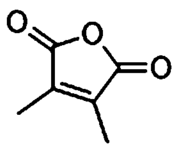 formula V-3, 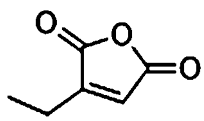 formula V-4,

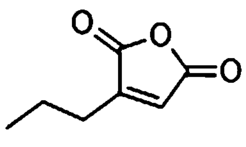 formula V-5, 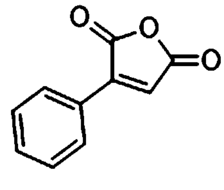 formula V-6,

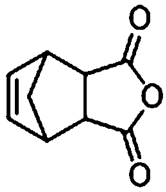 formula V-7, 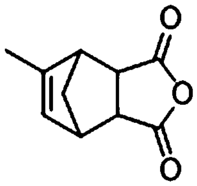 formula V-8,

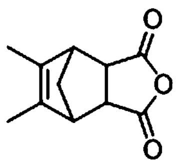 formula V-9, or 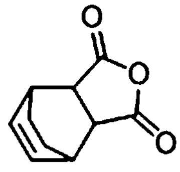 formula V-10.

In some embodiments, based on the mass of the electrolyte, the mass percentage of the compound of formula III is 0.1wt% to 6wt%. Illustratively, the mass percentage of the compound of formula III may be 0.1wt%, 0.5wt%, 0.8wt%, 1wt%, 2wt%, 3wt%, 4wt%, 5wt%, 6wt%, or a range consisting of any two of the foregoing values.

In some embodiments, based on the mass of the electrolyte, the mass percentage of the compound represented by formula IV is 0.01wt% to 2wt%. Illustratively, the mass percentage of the compound represented by formula IV may be 0.01wt%, 0.05wt%, 0.08wt%, 0.1wt%, 0.2wt%, 0.3wt%, 0.5wt%, 1wt%, 1.5wt%, 2wt%, or a range consisting of any two of the foregoing values.

In some embodiments, the mass percentage of the compound represented by formula V is 0.01wt% to 1wt%. Illustratively, the mass percentage of the compound represented by formula V may be 0.01wt%, 0.05wt%, 0.08wt%, 0.1wt%, 0.2wt%, 0.3wt%, 0.5wt%, 1wt%, or a range consisting of any two of the foregoing values.

In some embodiments, the mass ratio of the compound of formula III, the compound represented by formula IV, and the compound represented by formula V is (2-5):(1-2):(1-2). Illustratively, the mass ratio of the compound of formula III, the compound represented by formula IV, and the compound represented by formula V is (1.8-2.2):(0.8-1.2):(0.8-1.2).

In some embodiments, the electrolyte further includes a boron-containing lithium salt, the boron-containing lithium salt is selected from at least one of lithium tetrafluoroborate, lithium bis(oxalate)borate, or lithium difluoro(oxalate) borate, and based on the mass of the electrolyte, the mass percentage of the boron-containing lithium salt is 0.01wt% to 1wt%.

Illustratively, the mass percentage of the boron-containing lithium salt may be 0.01wt%, 0.05wt%, 0.08wt%, 0.1wt%, 0.3wt%, 0.5wt%, 0.8wt%, 1wt%, or a range consisting of any two of the foregoing values.

In some embodiments, the electrolyte may further include another non-aqueous organic solvent and electrolyte salt; and the other non-aqueous organic solvent may include at least one of carbonate solvent, carboxylate solvent, ether solvent, or other aprotic solvent.

Examples of the carbonate solvent include at least one of dimethyl carbonate, diethyl carbonate, ethyl methyl carbonate, methyl propyl carbonate, ethyl propyl carbonate, dipropyl carbonate, ethylene carbonate, propylene carbonate, or butylene carbonate.

Examples of the carboxylate solvent include at least one of methyl acetate, ethyl acetate, n-propyl acetate, n-butyl acetate, methyl propionate, ethyl propionate, propyl propionate, butyl propionate, methyl butyrate, ethyl butyrate, propyl butyrate, butyl butyrate, γ-butyrolactone, valerolactone, or butyrolactone.

Examples of the ether solvent include at least one of ethylene glycol dimethyl ether, diethylene glycol dimethyl ether, tetraethylene glycol dimethyl ether, dibutyl ether, tetrahydrofuran, 2-methyltetrahydrofuran, or bis(2,2,2-trifluoroethyl) ether.

The electrolyte salt includes at least one of an organic lithium salt or an inorganic lithium salt. In some embodiments, the electrolyte salt includes at least one of lithium hexafluorophosphate $LiPF_6$, lithium bis(trifluoromethanesulfonyl)imide $LiN(CF_3SO_2)_2$ which is abbreviated as LiTFSI, lithium bis(fluorosulfonyl)imide $Li(N(SO_2F)_2)$ (abbreviated as LiFSI), lithium cesium hexafluoride $LiCsF_6$, lithium perchlorate $LiClO_4$, or lithium trifluoromethanesulfonate $LiCF_3SO_3$.

In some embodiments, based on the mass of the electrolyte, the mass percentage of the electrolyte salt is 10% to 20%. If the concentration of the electrolyte salt is too low, the ionic conductivity of the electrolyte is low, which will affect the rate and cycling performance of the electrochemical device. If the concentration of the electrolyte salt is too high, the viscosity of the electrolyte is too large, affecting the rate performance of the electrochemical device. Optionally, the mass percentage of the electrolyte salt is 12% to 19%.

Electrochemical device

A second aspect of the embodiments of the present application provides an electrochemical device, and the electrochemical device includes a housing and an electrode assembly. The housing is used to encapsulate an electrode assembly, and the electrode assembly including a positive electrode plate, a negative electrode plate, a separator, and the electrolyte of the first aspect described above.

Positive electrode plate

The positive electrode plate includes a positive electrode current collector and a positive electrode active material layer disposed on the positive electrode current collector, and the positive electrode active material layer may be located on one side or two sides of the positive electrode current collector.

In some embodiments, the positive electrode current collector may be aluminum foil, or other positive electrode current collectors commonly used in the art, for example, may include aluminum alloy foil, a composite current collector (for example, a composite current collector with a metal layer disposed on the surface of a polymer layer), or the like.

In some embodiments, the thickness of the positive electrode current collector may be 1 μm to 200 μm. The present application does not particularly limit the thickness of the positive electrode current collector as long as the purpose of the present application can be achieved.

In some embodiments, the positive electrode active material layer may be applied only on a partial region of the positive electrode current collector.

In some embodiments, the thickness of the positive electrode active material layer may be 10 μm to 500 μm. The present application does not particularly limit the thickness of the positive electrode active material layer as long as the purpose of the present application can be achieved.

In some embodiments, the positive electrode active material layer includes a positive electrode active material, and the positive electrode active material includes $LiCoO_2$, $LiNiO_2$, $LiMn_2O_4$, $LiCo_{1-y}MyO_2$, $LiNi_{1-y}MyO_2$, $LiMn_{2-y}MyO_4$, or $LiNi_xCo_yMn_zM_{1-x-y-z}O_2$, where M is selected from at least one of Fe, Co, Ni, Mn, Mg, Cu, Zn, Al, Sn, B, Ga, Cr, Sr, V, or Ti, and $0 \le y \le 1$, $0 \le x \le 1$, $0 \le z \le 1$, and $x+y+z \le 1$.

In some embodiments, the positive electrode active material may include at least one of lithium cobalt oxide, lithium manganate, lithium iron phosphate, lithium manganese iron phosphate, nickel cobalt manganese oxide lithium, nickel cobalt aluminum oxide lithium, or nickel manganese oxide lithium, and the above positive electrode active materials may undergo doping and/or coating treatment.

In some embodiments, the positive electrode active material layer further includes a binder and a conductive agent. The binder may include at least one of polyvinylidene fluoride, a copolymer of vinylidene fluoride-hexafluoropropylene, a styrene-acrylate copolymer, a styrene-butadiene copolymer, polyamide, polyacrylonitrile, polyacrylate, polyacrylic acid, polyacrylate salt, sodium carboxymethyl cellulose, polyvinyl acetate, polyvinylpyrrolidone, polyvinyl ether, polymethyl methacrylate, polytetrafluoroethylene, or polyhexafluoropropylene. The conductive agent may include at least one of conductive carbon black, acetylene black, Ketjen black, lamellar graphite, graphene, carbon nanotubes, or carbon fibers.

In some embodiments, the mass ratio of the positive electrode active material, the conductive agent, and the binder in the positive electrode active material layer may be 70-98:1-15:1-15. It is understandable that the present application does not particularly limit the mass ratio of the positive electrode active material, the conductive agent, and the binder in the positive electrode active material layer, and those skilled in the art may select according to actual needs as long as the purpose of the present application can be achieved.

Negative electrode plate

The negative electrode may include a negative electrode current collector and a negative electrode active material layer disposed on the negative electrode current collector, and the negative electrode active material layer may be disposed on one side or two sides of the negative electrode current collector. In some embodiments, the negative electrode current collector may be at least one of copper foil, aluminum foil, nickel foil, or carbon-based current collector. In some embodiments, the thickness of the negative electrode current collector may be 1 μm to 200 μm. In some embodiments, the negative electrode active material layer may be applied only on a partial region of the negative electrode current collector.

In some embodiments, the thickness of the negative electrode active material layer may be 10 μm to 500 μm. It should be understood that these are only exemplary, and other suitable thicknesses may be used.

In some embodiments, the negative electrode active material layer includes a negative electrode active material. In some embodiments, the negative electrode active material in the negative electrode active material layer includes at least one of lithium metal, natural graphite, artificial graphite, or silicon-based material. In some embodiments, the silicon-based material includes at least one of silicon, silicon oxide compound, silicon carbon compound, or silicon alloy.

In some embodiments, the negative electrode active material layer may further include a conductive agent and/or a binder. The conductive agent in the negative electrode active material layer may include at least one of carbon black, acetylene black, Ketjen black, lamellar graphite, graphene, carbon nanotubes, carbon fibers, or carbon nanowires. In some embodiments, the binder in the negative electrode active material layer may include at least one of carboxymethyl cellulose CMC, polyacrylic acid, polyacrylate salt, polyacrylate, polyvinylpyrrolidone, polyaniline, polyimide, polyamide imide, polysiloxane, styrene-butadiene rubber, epoxy resin, polyester resin, polyurethane resin, or polyfluorene. It should be understood that the materials disclosed above are only exemplary, and the negative electrode active material layer may use any other suitable materials. In some embodiments, the mass ratio of the negative electrode active material, the conductive agent, and the binder in the negative electrode active material layer may be 80-99:0.5-10:0.5-10. It should be understood that this is only exemplary and is not intended to limit the present application.

Separator

The separator includes at least one of polyethylene, polypropylene, polyvinylidene fluoride, polyethylene terephthalate, polyimide, or aramid. For example, polyethylene includes at least one selected from high-density polyethylene, low-density polyethylene, or ultra-high molecular weight polyethylene. In particular, polyethylene and polypropylene have a good effect on preventing short circuits and can improve the stability of the battery through a shutdown effect. In some embodiments, the thickness of the separator is in the range of about 3 μm to 500 μm.

In some embodiments, the surface of the separator may further include a porous layer, and the porous layer is disposed on at least one surface of the separator. The porous layer includes at least one of inorganic particles or a binder. The inorganic particles are selected from at least one of alumina $Al_2O_3$, silica $SiO_2$, magnesia MgO, titania $TiO_2$, hafnia $HfO_2$, tin oxide $SnO_2$, ceria $CeO_2$, nickel oxide NiO, zinc oxide ZnO, calcium oxide CaO, zirconia $ZrO_2$, yttria $Y_2O_3$, silicon carbide SiC, boehmite, aluminum hydroxide, magnesium hydroxide, calcium hydroxide, or barium sulfate. In some embodiments, the pores of the separator have a diameter in the range of about 0.01 μm to 1 μm. The binder of the porous layer is selected from at least one of polyvinylidene fluoride, a copolymer of vinylidene fluoride-hexafluoropropylene, polyamide, polyacrylonitrile, polyacrylate, polyacrylic acid, polyacrylate salt, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve the heat resistance, oxidation resistance, and electrolyte wetting performance of the separator, and enhance the adhesion between the separator and the electrode plate.

Housing

The housing may be a hard shell or a flexible shell. Illustratively, the material of the hard shell may be metal, and the flexible shell may be a metal plastic film, such as aluminum plastic film, or steel plastic film.

The electrochemical device of the present application is not particularly limited and may include any device in which an electrochemical reaction occurs. In some embodiments, the electrochemical device may include, but is not limited to, a lithium-ion battery. The electrode assembly in the electrochemical device is a wound electrode assembly or a stacked electrode assembly. In some embodiments, the electrochemical device is a lithium-ion battery, but the present application is not limited thereto. In some embodiments of the present application, a lithium-ion battery is used as an example. The positive electrode, the separator, and the negative electrode are sequentially wound or stacked into an electrode assembly, and then placed in, for example, an aluminum plastic film housing for sealing. The electrolyte is injected, followed by formation and sealing to obtain a lithium-ion battery. Then, the prepared lithium-ion battery is subjected to performance testing. Those skilled in the art will understand that the preparation method of the electrochemical device, for example, the lithium-ion battery, described above is only an embodiment. Without departing from the content disclosed in the present application, other methods commonly used in the art may be used.

Hereinafter, the electrochemical device being a lithium-ion battery is used as an example in conjunction with specific embodiments, and the present application will be further described. It should be understood that these embodiments are only used to illustrate the present application and are not used to limit the scope of the present application.

Below, examples and comparative examples are presented to illustrate the embodiments of the present application in greater detail. Unless otherwise stated, the listed parts, contents, percentages, and ratios are all based on weight.

Preparation of positive electrode plate

A positive electrode active material lithium cobalt oxide $LiCoO_2$, a conductive agent conductive carbon black, and a binder polyvinylidene fluoride PVDF were dissolved in N-methylpyrrolidone NMP solution in a weight ratio of 97.9:0.9:1.2 to form a positive electrode slurry. A 13 $\mu$m aluminum foil was used as the positive electrode current collector, the positive electrode slurry was applied on the positive electrode current collector, and after drying, cold pressing, and cutting, a positive electrode was obtained. The compacted density of the positive electrode was 4.15 g/cm$^3$.

Preparation of negative electrode plate

A negative electrode active material artificial graphite, a binder styrene-butadiene rubber SBR, and a thickener sodium carboxymethyl cellulose CMC were dissolved in deionized water in a weight ratio of 97.4:1.4:1.2 to form a negative electrode slurry. A 10 $\mu$m thick copper foil was used as a negative electrode current collector, the negative electrode slurry was applied on the negative electrode current collector, and after drying, cold pressing, and cutting, a negative electrode was obtained. The compacted density of the negative electrode was 1.8 g/cm$^3$.

Preparation of separator

The separator substrate was 5 $\mu$m thick polyethylene PE, a 2 $\mu$m thick alumina ceramic layer was applied on one surface of the separator substrate, and finally 2.5 mg/1540.25 mm$^2$ of binder polyvinylidene fluoride PVDF was applied on two surfaces of the separator with a single-layer ceramic coating, and dried. The porosity of the separator was 39%.

Preparation of electrolyte

In an environment with water content less than 10 ppm, the compound of formula I-A, the compound of formula I-B, the compound of formula I-C, or other non-aqueous organic solvents were mixed in a certain mass ratio, then an appropriate amount of the compound of formula II was added, and these materials were mixed uniformly. An electrolyte salt $LiPF_6$ was dissolved in the above mixed solvent, and mixed uniformly to form an electrolyte, where based on the mass of the electrolyte, the mass percentage of $LiPF_6$ was 12.5%. The difference between Examples 1 to 16 and Comparative Example 1 lied in the types and/or contents of the compound of formula I-A, the compound of formula I-B, the compound of formula I-C, or the compound of formula II used in the electrolyte, as specifically shown in Table 1. The corresponding relationships of some compound abbreviations were as follows: diethyl carbonate DEC, and ethyl propionate EP.

The difference between Examples 17 to 35 and Example 5 lied in that Examples 17 to 35 further added the compound represented by formula III, the compound represented by formula IV, and/or the compound represented by formula V on the basis of the electrolyte of Example 5, as specifically shown in Table 2.

The difference between Examples 36 to 39 and Example 5 lied in that Examples 36 to 39 further added boron-type lithium salts on the basis of the electrolyte of Example 5, as specifically shown in Table 3.

Preparation of lithium-ion battery

The positive electrode plate, the separator, and the negative electrode plate were sequentially stacked, so that the separator was positioned between the positive electrode plate and the negative electrode plate to play a role of separation, and wound to obtain an electrode assembly. The electrode assembly was placed in an outer packaging aluminum plastic film, and dehydrated at 80°C. Then the above electrolyte was injected, followed by sealing, and through processes such as formation, degassing, and cutting, a lithium-ion battery was obtained.

Performance testing:

(1) Test for 25°C cycling performance:

Under 25°C conditions, the lithium-ion battery was charged to 4.5 V at 0.5C, then charged at a constant voltage of 4.5 V to 0.05C, and discharged at 1C current to 3.0 V. The process of charging at 0.5C and discharging at 1C was repeated for 800 cycles. The discharge capacity after the 3rd cycle was used as the benchmark, and the capacity retention rate was used as an indicator to evaluate the cycling performance of the lithium-ion battery.

Cycling capacity retention rate = discharge capacity after 800th cycle/discharge capacity after 3rd cycle $\times$ 100%.

(2) Test for high-temperature storage performance:

The lithium-ion battery was charged at a constant current of 0.5C to 4.5 V at 25°C, and then charged at a constant voltage until the current was 0.05C. The thickness of the lithium-ion battery was tested and recorded as $d_0$. It was placed in an 85°C oven for 8 h, and the thickness at this time was monitored and recorded as d.

Thickness expansion rate (%) after 4 h high-temperature storage of lithium-ion battery = $(d - d_0)/d_0 \times 100\%$. If the thickness expansion rate exceeded 50%, the test was stopped.

**Table 1 Parameters of examples 1-16 and comparative example 1**

| | Mass ratio of compound of formula I-A, compound of formula I-B, compound of formula I-C, or another solvent | Compound of formula II | | Value z | 25°C cycling capacity retention rate | Thickness expansion rate |
|---|---|---|---|---|---|---|
| | | Formula | y (wt%) | | | |
| Example 1 | Formula I-1/formula I-20 = 5/95 | Formula II-14 | 1 | 86.5 | 75.2% | 32.3% |
| Example 2 | Formula I-1/formula I-20 = 10/90 | Formula II-14 | 1 | 86.5 | 78.5% | 39.6% |
| Example 3 | Formula I-1/formula I-20 = 15/85 | Formula II-14 | 1 | 86.5 | 77.5% | 42.5% |
| Example 4 | Formula I-1/formula I-20 = 20/80 | Formula II-14 | 1 | 86.5 | 72.1% | 45.3% |
| Example 5 | Formula I-1/formula I-20/I-23 = 10/70/20 | Formula II-14 | 1 | 86.5 | 78.9% | 37.2% |
| Example 6 | Formula I-1/formula I-20/formula I-51 = 10/70/20 | Formula II-14 | 1 | 86.5 | 77.6% | 37.8% |
| Example 7 | Formula I-1/formula I-20/DEC = 10/70/20 | Formula II-14 | 1 | 69.2 | 70.5% | 40.3% |
| Example 8 | Formula I-1/formula I-20/EP = 10/70/20 | Formula II-14 | 1 | 69.2 | 76.9% | 39.7% |
| Example 9 | Formula I-1/formula I-20/EP = 10/60/30 | Formula II-14 | 1 | 60.6 | 75.7% | 41.2% |
| Example 10 | Formula I-1/formula I-20/EP = 10/40/50 | Formula II-14 | 1 | 43.2 | 72.3% | 45.9% |
| Example 11 | Formula I-1/formula I-20 = 10/90 | Formula II-14 | 2 | 42.8 | 71.5% | 26.5% |
| Example 12 | Formula I-1/formula I-20/EP = 5/10/85 | Formula II-14 | 2 | 6.4 | 69.1% | 15.2% |
| Example 13 | Formula I-1/formula I-20/formula I-23 = 10/70/20 | Formula II-3 | 1 | 86.5 | 77.5% | 38.6% |
| Example 14 | Formula I-1/formula I-20/formula I-23 = 10/70/20 | Formula II-15 | 1 | 86.5 | 78.7% | 36.8% |
| Example 15 | Formula I-1/formula I-20/formula I-23 = 10/70/20 | Formula II-19 | 1 | 86.5 | 79.2% | 36.3% |
| Example 16 | Formula I-11/formula I-20/formula I-51 = 10/70/20 | Formula II-14 | 1 | 86.5 | 76.2% | 39.9% |
| Comparative Example 1 | Formula I-1/DEC = 10/90 | / | / | / | * | >50% |
| Note: "*" indicates that the cycling could not reach 800 cycles. | | | | | | |

By comparing Examples 1 to 16 in Table 1 with Comparative Example 1, it can be seen that the synergistic cooperation between the compound of formula I-A, the compound of formula I-B and/or the compound of formula I-C, and the compound of formula II can significantly improve the room-temperature cycling performance and high-temperature storage performance of the lithium-ion battery. In Comparative Example 1, only formula I-1 (the compound represented by formula I-A) is contained, without adding the compound of formula I-B or formula I-C, nor the compound of formula II. It cannot reach 800 cycles at room temperature, and its thickness expansion rate at high temperature is greater than 50%. In Examples 1 to 16, by adjusting the contents of the compound of formula I-A, the compound of formula I-B and/or formula I-C, and the compound of formula II within appropriate ranges, the capacity retention rate after 800 cycles at room temperature can reach about 70% or more, and the thickness expansion rate at high temperature is also about 45% or less. In particular, in Examples 5 and 6, the capacity retention rate after 800 cycles at room temperature can reach more than 77%, and the thickness expansion rate at high temperature is also less than 38%. Example 16 and Example 6 are parallel examples, showing that other compounds in formula I-A can also achieve similar effects to Example 6. It can be seen that the combination between the compound of formula I-A, the compound of formula I-B, and/or the compound of formula I-C is beneficial to improving the oxidation resistance of the electrolyte, and the compound of formula II can stabilize the surface of transition metals. Through the synergistic cooperation between the compound of formula I and the compound of formula II, the continuous consumption of the electrolyte can be inhibited. When the contents of the compound of formula I-A, the compound of formula I-B, the compound of formula I-C, and the compound of formula II are within the ranges of the present application, the cycling performance and high-temperature storage performance of the electrochemical device are better. The content of each compound is the mass percentage calculated based on the total mass of the electrolyte.

**Table 2 Parameters of example 5 and examples 17-35**

| | Compound of formula III | | Compound of formula IV | | Compound of formula V | | 25°C cycling capacity retention rate | Thickness expansion rate |
|---|---|---|---|---|---|---|---|---|
| | Formula | Content (wt%) | Formula | Content (wt%) | Formula | Content (wt%) | | |
| Example 5 | / | / | / | / | / | / | 78.9% | 37.2% |
| Example 17 | Formula III-7 | 0.1 | / | / | / | / | 79.1% | 36.7% |
| Example 18 | Formula III-7 | 1 | / | / | / | / | 79.6% | 35.8% |
| Example 19 | Formula III-12 | 2 | / | / | / | / | 79.3% | 35.2% |
| Example 20 | Formula III-12 | 4 | / | | / | / | 79.9% | 34.2% |
| Example 21 | Formula III-7 | 1 | / | / | / | / | 79.3% | 32.7% |
| | Formula III-12 | 5 | | | | | | |
| Example 22 | / | / | Formula IV-1 | 0.1 | / | / | 79.5% | 36.9% |
| Example 23 | | | Formula IV-1 | 0.3 | / | / | 80.1% | 36.2% |
| Example 24 | / | / | Formula IV-1 | 0.5 | / | / | 81.9% | 35.5% |
| Example 25 | / | / | Formula IV-1 | 1 | / | / | 82.8% | 34.6% |
| Example 26 | / | / | Formula IV-1 | 2 | / | / | 82.2% | 34.2% |
| Example 27 | / | / | / | / | Formula V-3 | 0.1 | 79.3% | 36.5% |

(continued)

| | Compound of formula III | | Compound of formula IV | | Compound of formula V | | 25°C cycling capacity retention rate | Thickness expansion rate |
|---|---|---|---|---|---|---|---|---|
| | Formula | Content (wt%) | Formula | Content (wt%) | Formula | Content (wt%) | | |
| Example 28 | / | / | / | / | Formula V-3 | 0.3 | 79.8% | 35.6% |
| Example 29 | / | / | / | / | Formula V-3 | 0.5 | 80.5% | 34.6% |
| Example 30 | / | / | / | / | Formula V-3 | 1 | 80.2% | 32.9% |
| Example 31 | Formula III-7 | 1 | Formula IV-1 | 0.5 | / | / | 81.2% | 33.5% |
| Example 32 | Formula III-7 | 1 | / | / | Formula V-3 | 0.5 | 82.1% | 32.0% |
| Example 33 | Formula III-7 | 1 | Formula IV-1 | 0.5 | Formula V-3 | 0.5 | 83.7% | 29.1% |
| Example 34 | Formula III-14 | 1 | Formula IV-4 | 0.5 | Formula V-6 | 0.5 | 82.8% | 31.0% |
| Example 35 | Formula III-2 | 1 | Formula IV-1 | 0.5 | Formula V-3 | 0.5 | 80.7% | 33.2% |

Examples 17 to 35 in Table 2 are all based on the electrolyte of Example 5 with further addition of at least one of the compound of formula III, the compound of formula IV, or the compound of formula V. From the data in Table 2, it can be seen that adding the compound of formula III, the compound of formula IV, and the compound of formula V on the basis of the electrolyte of Example 5 can further improve the room-temperature cycling performance and high-temperature storage performance of the electrochemical device. This is because the compound of formula III can form an interface protective layer between the positive electrode and the electrolyte and between the negative electrode and the electrolyte, and the compound of formula IV and the compound of formula V can polymerize to form a protective layer, which is beneficial to inhibiting electrolyte consumption and gas production. This is particularly applicable to Example 33. Example 33 adds appropriate amounts of the compound of formula III, the compound of formula IV, and the compound of formula V on the basis of the electrolyte of Example 5. According to Table 2, the capacity retention rate of Example 33 after 800 cycles at room temperature is as high as 83.7%, and its thickness expansion rate at high temperature is also significantly reduced to 29.1%. The synergistic effect of the compound of formula III, the compound of formula IV, and the compound of formula V strengthens and stabilizes the beneficial effects of the protective layer, thereby obtaining improved cycling and high-temperature storage performance. Examples 34 and 35 are parallel examples of Example 33, differing from Example 33 in the types of the compound of formula III, the compound of formula IV, and the compound of formula V, and can achieve similar effects to Example 33.

**Table 3 Parameters of example 5 and examples 36-39**

| | Boron-type lithium salt | | 25°C cycling capacity retention rate |
|---|---|---|---|
| | Formula | wt% | |
| Example 5 | / | / | 78.9% |
| Example 36 | LiBOB | 0.1 | 79.9% |
| Example 37 | LiBOB | 0.3 | 80.6% |
| Example 38 | LiBOB | 0.5 | 82.8% |
| Example 39 | LiBOB | 1 | 83.2% |

Examples 36 to 39 in Table 3 are all based on the electrolyte of Example 5 with further addition of a boron-type

lithium salt. By comparing Example 5 and Examples 36-39, it can be seen that adding a boron-type lithium salt on the basis of the electrolyte of Example 5 can further improve the room-temperature cycling performance of the lithium-ion battery.

The above are only preferred embodiments of the present application and are not intended to limit the present application. Any modifications, equivalent replacements, and improvements made within the spirit and principles of the present application shall be included within the protection scope of the present application.

## Claims

1. An electrolyte, wherein the electrolyte comprises a compound of formula I and a compound represented by formula II; wherein

the compound of formula I comprises at least two of a compound represented by formula I-A, a compound represented by formula I-B, and a compound represented by formula I-C, and at least comprises the compound represented by formula I-A;

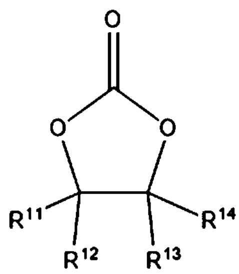

formula I-A

in formula I-A, $R^{11}$, $R^{12}$, $R^{13}$, and $R^{14}$ are each independently selected from hydrogen, fluorine, and substituted or unsubstituted $C_1$-$C_3$ alkyl, in a case of substitution, a substituent comprises halogen, and the compound represented by formula I-A contains at least one fluorine atom;

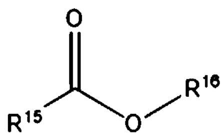

formula I-B

in formula I-B, $R^{15}$ and $R^{16}$ are each independently selected from substituted or unsubstituted $C_1$-$C_5$ alkyl, in a case of substitution, a substituent comprises halogen, and the compound represented by formula I-B contains at least one halogen atom;

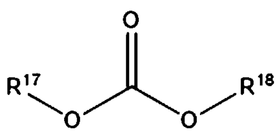

formula I-C

in formula I-C, $R^{17}$ and $R^{18}$ are each independently selected from substituted or unsubstituted $C_1$-$C_5$ alkyl, in a case of substitution, a substituent comprises halogen, and the compound represented by formula I-C contains at least one halogen atom;

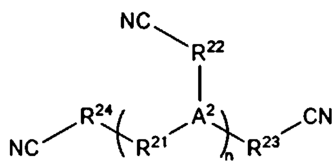

formula II;

and

in formula II, n is selected from integers of 0 to 4, $A^2$ is selected from any one of

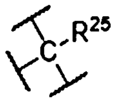, 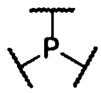, or 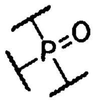,

and $R^{21}$, $R^{22}$, $R^{23}$, and $R^{24}$ are each independently selected from any one of a covalent single bond, $C_1$-$C_5$ alkylene, $C_2$-$C_4$ alkenylene, or

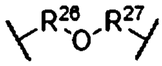;

wherein $R^{25}$ is selected from any one of hydrogen, cyano, $C_1$-$C_3$ alkyl, or $C_1$-$C_3$ alkyl substituted with cyano, and $R^{26}$ and $R^{27}$ are each independently selected from covalent single bond or $C_1$-$C_3$ alkylene.

**2.** The electrolyte according to claim 1, wherein the compound represented by formula I-A is selected from at least one of the following compounds:

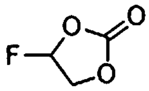 formula I-1, 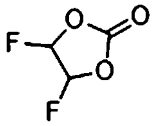 formula I-2, 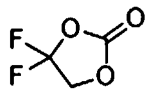 formula I-3,

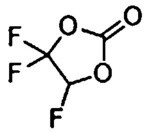 formula I-4, 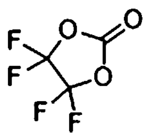 formula I-5, 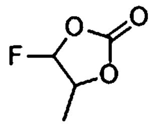 formula I-6,

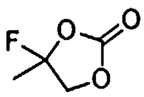 formula I-7, 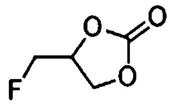 formula I-8, 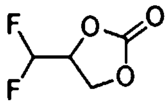 formula I-9,

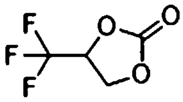 formula I-10, 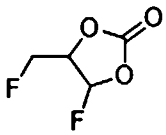 formula I-11, 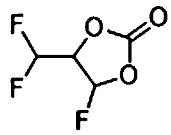 formula I-12,

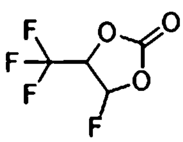 formula I-13, 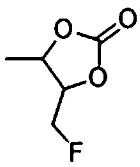 formula I-14, or 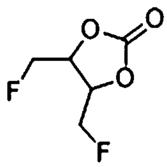 formula I-15.

**3.** The electrolyte according to claim 1, wherein the compound represented by formula I-B is selected from at least one of the following compounds:

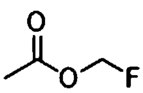 formula I-16, 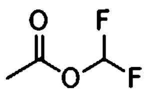 formula I-17, 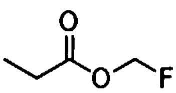 formula I-18,

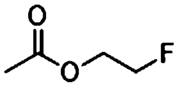 formula I-19, 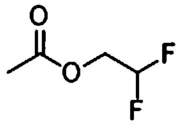 formula I-20, 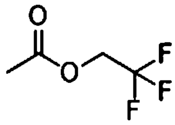 formula I-21,

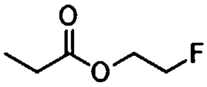 formula I-22, 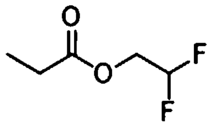 formula I-23,

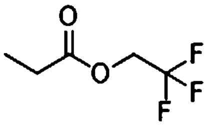 formula I-24, 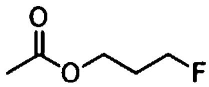 formula I-25,

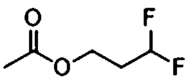 formula I-26, 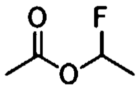 formula I-27, 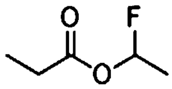 formula I-28,

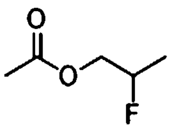 formula I-29, 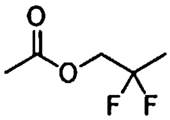 formula I-30, 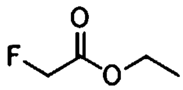 formula I-31,

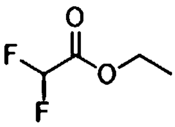 formula I-32, 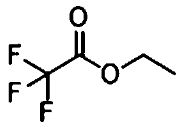 formula I-33, 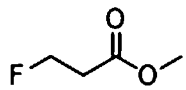 formula I-34,

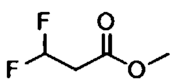 formula I-35, 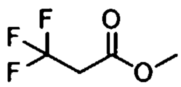 formula I-36, 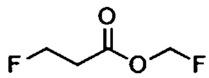 formula I-37,

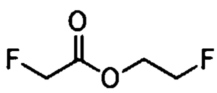 formula I-38, 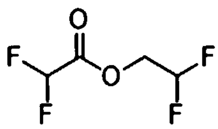 formula I-39,

or

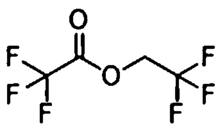 formula I-40.

4. The electrolyte according to claim 1, wherein the compound represented by formula I-C is selected from at least one of the following compounds:

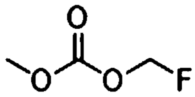 formula I-41, 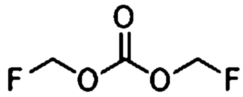 formula I-42,

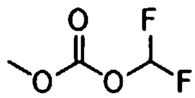 formula I-43, 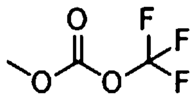 formula I-44,

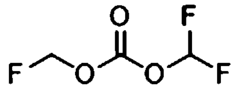 formula I-45, 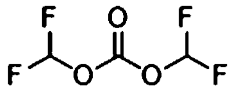 formula I-46,

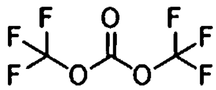 formula I-47, 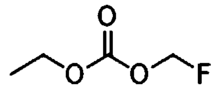 formula I-48,

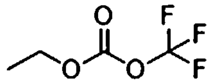 formula I-49, 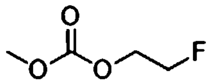 formula I-50,

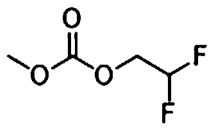 formula I-51, 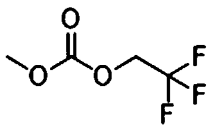 formula I-52,

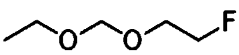 formula I-53, 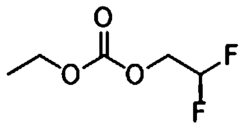 formula I-54,

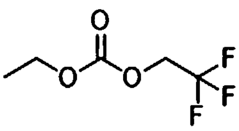 formula I-55, 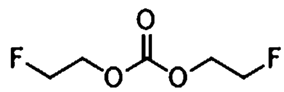 formula I-56,

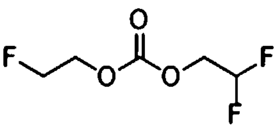 formula I-57, 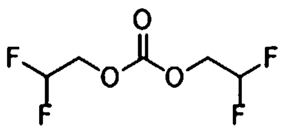 formula I-58,

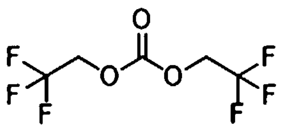 formula I-59, or 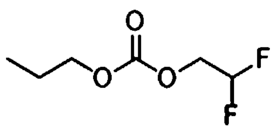 formula I-60.

**5.** The electrolyte according to claim 1, wherein the compound represented by formula II is selected from at least one of the following compounds:

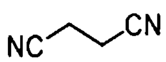 formula II-1, 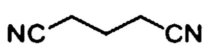 formula II-2,

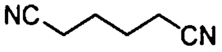 formula II-3, 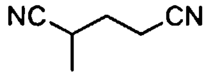 formula II-4,

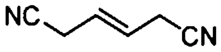 formula II-5, 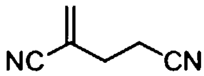 formula II-6, 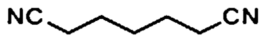 formula II-7, 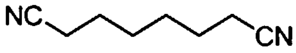 formula II-8, 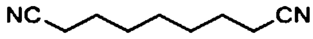 formula II-9,

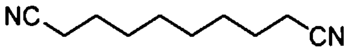 formula II-10, 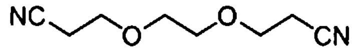 formula II-11,

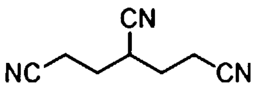 formula II-12, 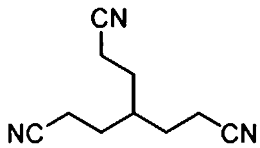 formula II-13,

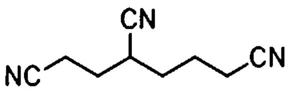 formula II-14, 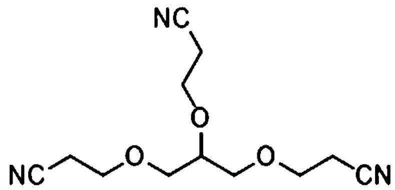 formula II-15,

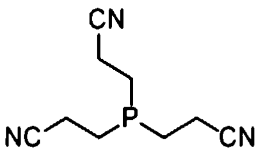 formula II-16, 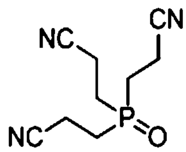 formula II-17,

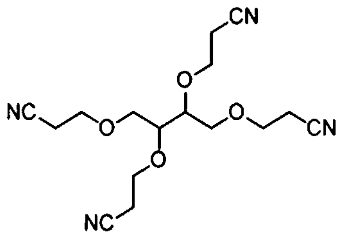 formula II-18, 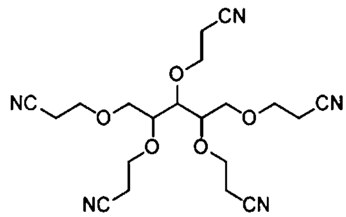 formula II-19,

or

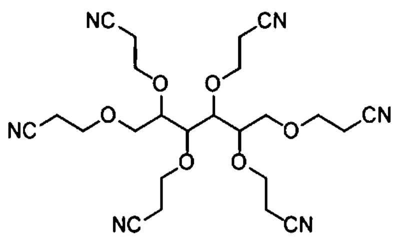 formula II-20.

**6.** The electrolyte according to claim 1, wherein based on a mass of the electrolyte, a mass percentage of the compound represented by formula I-A is denoted as $x_1$%, a sum of mass percentages of the compound represented by formula I-B and the compound represented by formula I-C is denoted as $x_2$%, a mass percentage of the compound represented

by formula II is denoted as y%, a sum of $x_1$ and $x_2$ is denoted as x, and a ratio of x to y is denoted as z, satisfying at least one of the following conditions:
(1) $20 \leq x \leq 90$; (2) $2 \leq x_2/x_1 \leq 20$; (3) $0.5 \leq y \leq 5$; or (4) $5 \leq z \leq 90$.

**7.** The electrolyte according to claim 1, wherein the electrolyte further comprises a compound of formula III, and the compound of formula III comprises a compound represented by formula III-A and/or a compound represented by formula III-B;

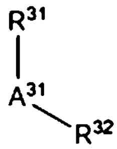 formula III-A

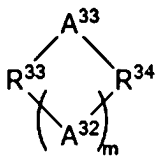 formula III-B,

wherein

in formula III-A and formula III-B, m is selected from 0 or 1, $A^{31}$, $A^{32}$, and $A^{33}$ are each independently selected from at least one of

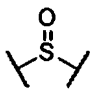, 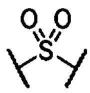, 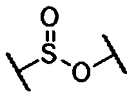, 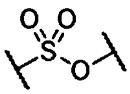,

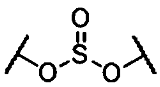, 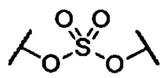, or 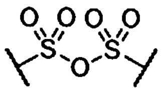,

and

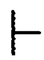

represents a binding site with an adjacent atom;
$R^{31}$ and $R^{32}$ are each independently selected from substituted or unsubstituted $C_1$-$C_5$ alkyl or substituted or unsubstituted $C_2$-$C_5$ alkenyl, and in a case of substitution, a substituent comprises halogen; and
$R^{33}$ and $R^{34}$ are each independently selected from substituted or unsubstituted $C_1$-$C_5$ alkylene or substituted or unsubstituted $C_2$-$C_5$ alkenyl, and in a case of substitution, a substituent comprises halogen.

**8.** The electrolyte according to claim 7, wherein the compound of formula III is selected from at least one of the following compounds:

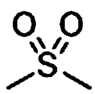 formula III-1, 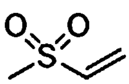 formula III-2, 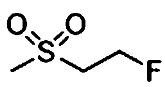 formula III-3,

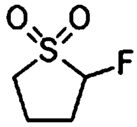 formula III-4,

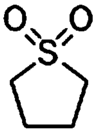 formula III-5, 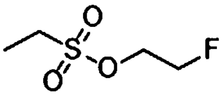 formula III-6, 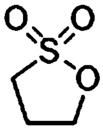 formula III-7,

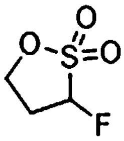 formula III-8, 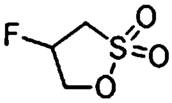 formula III-9, 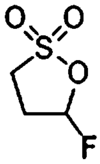 formula III-10, 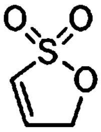

formula III-11, 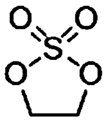 formula III-12, 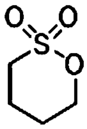 formula III-13,

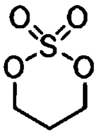 formula III-14, 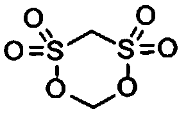 formula III-15, 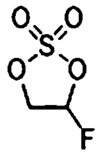 formula III-16,

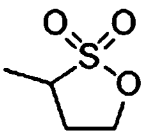 formula III-17, 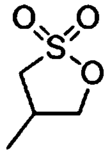 formula III-18, 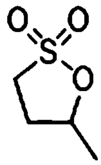 formula III-19, 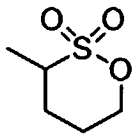

formula III-20, 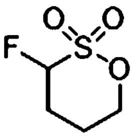 formula III-21, 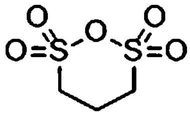 formula III-22, 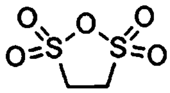

formula III-23, 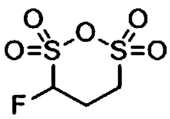 formula III-24, or 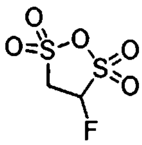 formula III-25.

**9.** The electrolyte according to claim 7, wherein the electrolyte further comprises a compound represented by formula IV;

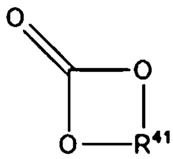 formula IV,

wherein
in formula IV, $R^{41}$ is selected from substituted $C_1$-$C_6$ alkylene and substituted or unsubstituted $C_2$-$C_6$ alkenylene, and in a case of substitution, a substituent is selected from $C_2$-$C_6$ alkenyl.

**10.** The electrolyte according to claim 9, wherein the compound represented by formula IV is selected from at least one of the following compounds:

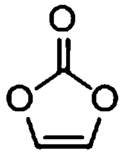 formula IV-1, 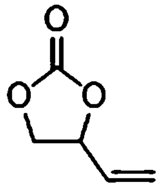 formula IV-2, 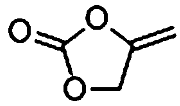 formula IV-3,

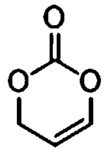 formula IV-4, or 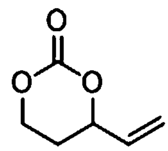 formula IV-5.

**11.** The electrolyte according to claim 9, wherein the electrolyte further comprises a compound represented by formula V;

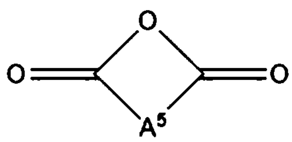 formula V,

wherein
in formula V, $A^5$ is selected from

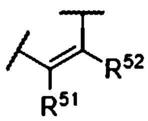 or 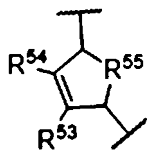,

$R^{51}$, $R^{52}$, $R^{53}$, and $R^{54}$ are each independently selected from hydrogen, substituted or unsubstituted $C_1$-$C_6$ alkyl, and substituted or unsubstituted $C_6$-$C_{10}$ aryl, and $R^{55}$ is selected from substituted or unsubstituted $C_1$-$C_6$ alkylene, and in a case of substitution, a substituent comprises halogen.

**12.** The electrolyte according to claim 11, wherein the compound represented by formula V is selected from at least one of the following compounds:

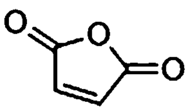 formula V-1, 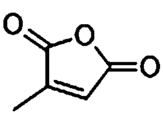 formula V-2, 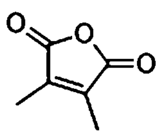 formula V-3,

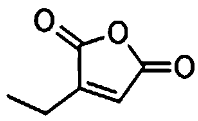 formula V-4, 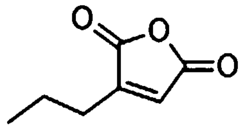 formula V-5,

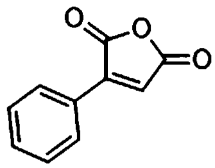 formula V-6, 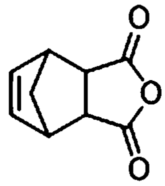 formula V-7,

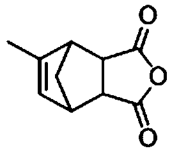 formula V-8, 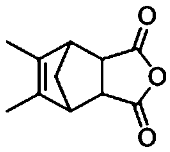 formula V-9, or 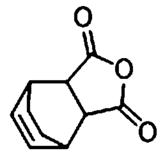 formula V-10.

**13.** The electrolyte according to claim 11, wherein based on a mass of the electrolyte, at least one of the following conditions is satisfied:

(1) a mass percentage of the compound of formula III is 0.1wt% to 6wt%;
(2) a mass percentage of the compound represented by formula IV is 0.01wt% to 2wt%; or
(3) a mass percentage of the compound represented by formula V is 0.01wt% to 1wt%.

**14.** The electrolyte according to claim 11, wherein a mass ratio of the compound of formula III, the compound represented by formula IV, and the compound represented by formula V is (2-5):(1-2):(1-2).

**15.** The electrolyte according to claim 1, wherein the electrolyte further comprises a boron-containing lithium salt; wherein

the boron-containing lithium salt is selected from at least one of lithium tetrafluoroborate, lithium bis(oxalate) borate, or lithium difluoro(oxalate)borate; and
based on a mass of the electrolyte, a mass percentage of the boron-containing lithium salt is 0.01wt% to 1wt%.

**16.** An electrochemical device, wherein the electrochemical device comprises the electrolyte according to any one of claims 1 to 15.

## INTERNATIONAL SEARCH REPORT

International application No.
**PCT/CN2023/121743**

**A. CLASSIFICATION OF SUBJECT MATTER**

H01M10/0567(2010.01)i； H01M10/0569(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 电解液, 氟, 碳酸酯, 羧酸酯, 腈, electrolyte, fluorine, carbonate, carboxylate, nitrile

**C. DOCUMENTS CONSIDERED TO BE RELEVANT**

| Category* | Citation of document, with indication, where appropriate, of the relevant passages | Relevant to claim No. |
|---|---|---|
| X | CN 114678493 A (ZHUHAI COSMX BATTERY CO., LTD.) 28 June 2022 (2022-06-28)<br>description, paragraphs 14-16 and 45-107 | 1-16 |
| X | CN 113892207 A (DONGGUAN AMPEREX TECHNOLOGY LIMITED) 04 January 2022 (2022-01-04)<br>description, paragraphs 48-113 and 137-149 | 1-16 |
| X | WO 2023117633 A1 (SOLVAY) 29 June 2023 (2023-06-29)<br>description, page 5, line 28-page 16, line 15, and claims 1-15 | 1-16 |
| X | WO 2022260373 A1 (LG ENERGY SOLUTION, LTD.) 15 December 2022 (2022-12-15)<br>description, paragraphs 36-117 and 171-263 | 1-16 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **01 June 2024** | **02 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/121743**

| Patent document cited in search report | | | Publication date (day/month/year) | Patent family member(s) | | | Publication date (day/month/year) |
|---|---|---|---|---|---|---|---|
| CN | 114678493 | A | 28 June 2022 | None | | | |
| CN | 113892207 | A | 04 January 2022 | WO | 2022141047 | A1 | 07 July 2022 |
| | | | | CN | 113892207 | A | 12 August 2022 |
| WO | 2023117633 | A1 | 29 June 2023 | None | | | |
| WO | 2022260373 | A1 | 15 December 2022 | KR | 20220165206 | A | 14 December 2022 |
| | | | | EP | 4273993 | A1 | 08 November 2023 |
| | | | | CN | 117121257 | A | 24 November 2023 |
| | | | | US | 2024106001 | A1 | 28 March 2024 |

Form PCT/ISA/210 (patent family annex) (July 2022)